(19) Europäisches Patentamt
European Patent Office
Office européen des brevets

(11) **EP 3 500 752 B1**

(12) **EUROPÄISCHE PATENTSCHRIFT**

(45) Veröffentlichungstag und Bekanntmachung des Hinweises auf die Patenterteilung:
**27.01.2021 Patentblatt 2021/04**

(21) Anmeldenummer: **17749717.9**

(22) Anmeldetag: **09.08.2017**

(51) Int Cl.:
*F03D 7/04* (2006.01)   *F03D 17/00* (2016.01)

(86) Internationale Anmeldenummer:
**PCT/EP2017/070181**

(87) Internationale Veröffentlichungsnummer:
**WO 2018/033447 (22.02.2018 Gazette 2018/08)**

(54) **MESSANORDNUNG EINER WINDENERGIEANLAGE**

MEASUREMENT ARRANGEMENT OF A WIND TURBINE

SYSTÈME DE MESURE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2016 DE 102016215533**

(43) Veröffentlichungstag der Anmeldung:
**26.06.2019 Patentblatt 2019/26**

(73) Patentinhaber: **Wobben Properties GmbH**
**26607 Aurich (DE)**

(72) Erfinder:
• **HAVLICEK, Paul**
**26603 Aurich (DE)**
• **BAUMGART, Heiko**
**26605 Aurich (DE)**
• **BINDER, Oliver**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**US-A1- 2011 158 806    US-A1- 2013 156 577**

**Beschreibung**

Die vorliegende Erfindung betrifft eine Messanordnung einer Windenergieanlage zum Bestimmen einer Schubkraft des Rotors, eine Windenergieanlage mit der Messanordnung, ein Verfahren zum Bestimmen einer Schubkraft des Rotors und ein Verfahren zum Betreiben einer Windenergieanlage. Ferner umfasst die vorliegende Erfindung einen Windpark und ein Verfahren zum Betreiben eines Windparks.

Windenergieanlagen, die aus der kinetischen Energie des Windes elektrische Energie erzeugen und in ein elektrisches Stromnetz einspeisen, sind allgemein bekannt. Heutzutage werden solche Windenergieanlagen meistens in Form von Windparks, das heißt Ansammlungen von Windenergieanlagen auf einer begrenzten Fläche, betrieben.

Bei der Planung und dem Betrieb eines solchen Windparks muss darauf geachtet werden, wie sich die einzelnen Windenergieanlagen des Windparks gegenseitig beeinflussen. Insbesondere im Nachlauf, also hinter dem Rotor einer Windenergieanlage, können sich starke Turbulenzen bilden. Eine Windenergieanlage, die sich genau in diesen Turbulenzen einer vorstehenden Windenergieanlage befindet, kann durch diese Turbulenzen so beeinflusst werden, dass sich die Energieausbeute verringert oder die Windenergieanlage sogar beschädigt wird.

Aus diesem Grund werden bei der Planung eines Windparks die Turbulenzen im Nachlauf jeder einzelnen Windenergieanlage als limitierender Faktor für die Beabstandung der einzelnen Windenergieanlagen mit einbezogen. Mit Hilfe von Simulationen werden die Turbulenzen hinter den einzelnen Windenergieanlagen für verschiedene Windrichtungen simuliert, und dann wird unter Beachtung der vorherrschenden Windrichtung an einem spezifischen Ort und unter Beaufschlagung einer Sicherheitsmarge der Mindestabstand zwischen den Windenergieanlagen bestimmt. Dabei müssen aus Sicherheitsgründen die Abstände der Windenergieanlagen größer gewählt werden, als es die meiste Zeit im Betrieb des Windparks nötig wäre. Das hat zur Folge, dass wesentlich weniger Windenergieanlagen pro Fläche aufgestellt werden können und der Windpark, für den meist nur eine begrenzte Fläche zur Verfügung steht, wird in seiner Leistung stark begrenzt. Hinzu kommt, dass es bei Extremereignissen oder zum Beispiel, wenn der Wind nicht wie vorhergesehen aus der vorherrschenden Windrichtung kommt, trotzdem zu Problemen mit Turbulenzen im Nachlauf von Windenergieanlagen kommen kann.

US 2011/0158806 A1 offenbart eine Windenergieanlage mit einem Rotorblatt, einer Vielzahl von Sensoren, einem Datenaggregator und einer Blattneigungskontrolleinheit. Die Vielzahl von Sensoren sind auf eine Vielzahl von Orten auf dem Rotorblatt verteilt und dazu geeignet, ein Moment des Rotorblattes zu bestimmen. Die Blattneigungskontrolleinheit ist des Weiteren eingerichtet, die Neigung des Rotorblattes basierend auf dem Moment zu adjustieren.

US 2013/0156577 A1 offenbart ein Verfahren zum Kontrollieren einer Windenergieanlage, das die Schritte aufweist a) Bereitstellen einer Anzahl von Betriebswerten relevant für eine Windenergieanlage, b) Berechnen eines Anschubeinstellpunktes auf Basis der Betriebswerte und c) Kontrollieren der Windenergieanlage entsprechend dem Anschubeinstellpunkt.

Der Erfindung liegt daher die Aufgabe zugrunde, wenigstens eines der vorgegangenen Probleme zu adressieren. Insbesondere soll der Stand der Technik verbessert werden und eine Lösung vorgeschlagen werden, die es ermöglicht, die Bestimmung von Turbulenzen im Nachlauf einer Windenergieanlage zu vereinfachen und somit die Regelung von Windparks zu verbessern.

Diese Aufgabe wird erfindungsgemäß gelöst durch eine Messanordnung einer einen Turm und einen aerodynamischen Rotor mit wenigstens einem Rotorblatt aufweisenden Windenergieanlage zum Bestimmen einer Schubkraft des Rotors, umfassend:

- eine Messvorrichtung eingerichtet zum Erfassen eines ersten Biegemoments des Turms in einer ersten Höhe und eines zweiten Biegemoments des Turms in einer zweiten Höhe, die von der ersten Höhe verschieden ist, wobei sich das erste und zweite Biegemoment aus jeweils einer Eigenmomentkomponente, aus einer Nickmomentkomponente und aus einer Schubkraftmomentkomponente zusammensetzt,
- eine Schubkraftbestimmungseinheit eingerichtet zum Bestimmen einer Schubkraft basierend auf einem auf Basis eines Vergleichs der ersten und zweiten Biegemomente bestimmten ersten Vergleichswerts, wobei der erste Vergleichswert unabhängig von der Eigenmomentkomponente und der Nickmomentkomponente ist.

Dadurch dass die Messvorrichtung ein erstes und ein zweites Biegemoment des Turms der Windenergieanlage in unterschiedlichen Höhen erfasst, wobei sich das erste und zweite Biegemoment jeweils aus einer Eigenmomentkomponente, einer Nickmomentkomponente und aus einer Schubkraftkomponente zusammensetzt, wird es der Schubkraftbestimmungseinheit ermöglicht, eine Schubkraft basierend auf einem ersten Vergleichswert zwischen den ersten und zweiten Biegemomenten zu bestimmen, wobei der erste Vergleichswert unabhängig von der Eigenmomentkomponente und der Nickmomentkomponente ist. Vorzugsweise heben sich die Beiträge der Eigenmomentkomponente und die Nickmomentkomponente in dem Vergleichswert demnach gegeneinander auf bzw. weg. Da bekannt ist, dass die Schubkraft eines Rotors direkt mit den Turbulenzen im Nachlauf korreliert, bietet die Schubkraft direkt einen Parameter zur Beurteilung der durch eine Windenergieanlage erzeugten Turbulenz. Durch zeitnahe Bestimmung der Schubkraft durch die Schubkraftbestimmungseinheit während des Betriebs der Windenergieanlage kann folglich die von der Windenergieanlage erzeugte Turbulenz im Nachlauf für jeden Zeitpunkt bestimmt werden, sodass es ermöglicht wird, die Windenergieanlage so zu steuern, dass die Turbulenz zu jedem Zeitpunkt begrenzt wird.

Die Eigenmomentkomponente entsteht dadurch, dass der Schwerpunkt der Gondel nicht in einer Linie mit der vertikalen Mittelachse des Turmes liegt, das heißt ein horizontaler Abstand größer Null zwischen dem Schwerpunkt der Gondel und der Turmmittelachse besteht. Die Eigenmomentkomponente ist abhängig von der auf die Gondel wirkenden Gewichtskraft und dem Abstand zwischen dem Schwerpunkt der Gondel und der Mittelachse des Turmes. Die Eigenmomentkomponente wirkt auf der gesamten Höhe des Turmes konstant.

Die Nickmomentkomponente entsteht durch die in unterschiedlichen Höhen auf die Rotorblätter wirkenden Winddruckkräfte. Diese Ungleichheit verursacht ein Drehmoment, das auch den Rotor wirkt und über den Rotor auf den Turm übertragen wird. Auch die Nickmomentkomponente wirkt über die Höhe des Turms konstant. Die Schubkraftmomentkomponente wird durch die auf den Rotor wirkende Schubkraft erzeugt und ist abhängig von der Höhe des Turms der Windenergieanlage.

Zudem wird vorgeschlagen, dass die Messvorrichtung einen ersten Sensor zum Erfassen des erste Biegemoments des Turms in der ersten Höhe und einen zweiten Sensor zum Erfassen des zweiten Biegemoments des Turms in der zweiten Höhe, die von der ersten Höhe verschieden ist, aufweist.

Da die Messvorrichtung so eingerichtet ist, einen ersten und einen zweiten Sensor jeweils in der ersten und zweiten Höhe aufzuweisen, kann das Biegemoment direkt am Turm in der jeweiligen Höhe gemessen werden. Dies verbessert deutlich die Genauigkeit der Messung und damit auch die Genauigkeit der Bestimmung der Schubkraft aus den Messwerten.

Weiter wird vorgeschlagen, dass der erste Sensor direkt unterhalb einer Gondel der Windenergieanlage angeordnet ist und der zweite Sensor in der Nähe eines Fußes der Windenergieanlage angeordnet ist.

Dadurch dass der erste Sensor direkt unterhalb einer Gondel der Windenergieanlage angeordnet ist und der zweite Sensor sich in der Nähe des Fußes der Windenergieanlage befindet, wird eine maximale Entfernung und damit eine maximale Höhendifferenz zwischen den beiden Sensoren erreicht. Je größer die Entfernung der Sensoren auf dem Turm ist, desto größer ist auch der Unterschied zwischen dem gemessenen ersten Biegemoment und dem gemessenen zweiten Biegemoment, sodass der erste Vergleichswert aus dem Vergleich des ersten und des zweiten Biegemoments besonders genau bestimmt werden kann. Dadurch kann ebenfalls die Genauigkeit der Bestimmung der Schubkraft erhöht werden. Direkt bedeutet in diesem Zusammenhang, dass die Sensoren möglichst nahe an der Gondel, bzw. dem Fuß, insbesondere in einem Abstand von weniger als 1 m bis 5 m, angebracht sind.

Es wird weiter vorgeschlagen, dass die Sensoren Dehnungsmessstreifen, insbesondere DMS-Vollbrücken, aufweisen. Dehnungsmessstreifen, insbesondere DMS-Vollbrücken, sind besonders geeignet, das Biegemoment des Turms einer Windenergieanlage effektiv und kostensparend zu bestimmen.

Weiter wird vorgeschlagen, dass die Schubkraftbestimmungseinheit als ersten Vergleichswert eine Differenz zwischen dem ersten und dem zweiten Biegemoment bestimmt.

Dadurch dass der erste Vergleichswert als Differenz zwischen dem ersten und zweiten Biegemoment bestimmt wird, wird gewährleistet, dass die Eigenmomentkomponente und die Nickmomentkomponente sich im ersten Vergleichswert wegheben und nur noch Anteile der Schubkraftkomponente im ersten Vergleichswert verbleiben. Somit ist der erste Vergleichswert indikativ für die Schubkraftkomponente der Windenergieanlage.

Weiter wird vorgeschlagen, dass die Schubkraftbestimmungseinheit eine Schubkraft des Rotors basierend auf dem ersten Vergleichswert und der Höhendifferenz zwischen der ersten und der zweiten Höhe, insbesondere als Verhältnis des ersten Vergleichswerts und der Höhendifferenz, bestimmt.

Durch Bestimmen des Verhältnisses des ersten Vergleichswerts und einer Höhendifferenz zwischen der ersten und der zweiten Höhe, in der das erste und zweite Biegemoment bestimmt wird, kann direkt die Schubkraft des Rotors bestimmt werden.

Weiter wird vorgeschlagen, dass die Messvorrichtung wenigstens einen dritten Sensor zum Erfassen eines dritten Biegemoments des Turms in einer dritten Höhe aufweist, wobei die dritte Höhe zwischen der ersten und der zweiten Höhe, insbesondere in der Mitte, liegt.

Dadurch dass die Messvorrichtung einen dritten Sensor zum Erfassen eines dritten Biegemoments in einer dritten Höhe zwischen der ersten und zweiten Höhe aufweist, kann sichergestellt werden, dass auch bei Ausfall eines der Sensoren in der ersten und der zweiten Höhe das Bestimmen einer Schubkraft des Rotors möglich ist. Dies erhöht die Sicherheit beim Betreiben der Windenergieanlage und ermöglicht einen Weiterbetrieb der Windenergieanlage auch bei Ausfall eines der Sensoren.

Weiter wird vorgeschlagen, dass die Schubkraftbestimmungseinheit dazu eingerichtet ist, eine erste Schubkraft basierend auf dem ersten Vergleichswert auf einer Höhendifferenz zwischen der ersten und der zweiten Höhe, eine zweite Schubkraft basierend auf dem zweiten Vergleichswert und einer Höhendifferenz zwischen der ersten und der dritten Höhe, und eine dritte Schubkraft basierend auf dem dritten Vergleichswert und einer Höhendifferenz zwischen der dritten und der zweiten Höhe zu bestimmen.

Dadurch dass ein zweiter Vergleichswert und ein dritter Vergleichswert jeweils aus einer Differenz zwischen dem ersten und dem dritten Biegemoment und einer Differenz zwischen dem dritten und dem zweiten Biegemoment gebildet wird, wird es ermöglicht, durch Vergleich des ersten, zweiten und dritten Vergleichswerts die Genauigkeit bei der Bestimmung des Biegemoments zu bestimmen. So sollten zum Beispiel der zweite und dritte Vergleichswert möglichst gleich sein, wenn der dritte Sensor mittig zwischen dem ersten und dem zweiten Sensor angeordnet ist. Werden Abweichungen in den vorherbestimmten Beziehungen oberhalb einer gewissen Toleranzgrenze bestimmt, so deutet dies darauf hin, dass wenigstens einer der beteiligten Sensoren eine Fehlmessung bereitgestellt hat und wenn bei Wiederholung der Messung sich das Ergebnis nicht verbessert, der Sensor möglicherweise eine Fehlfunktion aufweist. Somit kann rechtzeitig erkannt werden, wenn einer der Sensoren eine Fehlfunktion aufweist, und die Fehlfunktion kann an einen Betreiber der Windenergieanlage gemeldet werden.

Weiter wird vorgeschlagen, dass die Schubkraftbestimmungseinheit dazu eingerichtet ist, wenigstens einen zweiten und einen dritten Vergleichswert zu bestimmen, wobei der zweite Vergleichswert als eine Differenz zwischen dem ersten und dem dritten Biegemoment und der dritte Vergleichswert als eine Differenz zwischen dem dritten und dem zweiten Biegemoment gebildet wird.

Dadurch dass basierend auf dem ersten, zweiten und dritten Vergleichswert und den jeweiligen Höhendifferenzen vorzugsweise erste, zweite und dritte Schubkräfte bestimmt werden, wird es ermöglicht, die bestimmten Schubkräfte zu vergleichen. Dabei sollten alle drei Schubkräfte in einem vordefiniert ähnlichen Bereich liegen, wenn keine Fehlfunktion oder Fehlmessung der Sensoren vorliegt. Des Weiteren können die drei Schubkräfte dazu verwendet werden, die Genauigkeit der Schubkraftmessung zu erhöhen, insbesondere einen Mittelwert aus der ersten bis dritten Schubkraft zu bilden.

Weiter wird vorgeschlagen, dass die Schubkraftbestimmungseinheit dazu eingerichtet ist, die Schubkraft des Rotors als Mittelwert aus wenigstens zweien der ersten, zweiten und dritten Schubkraft zu bestimmen, oder wobei die Schubkraftbestimmungseinheit eingerichtet ist, die Schubkraft des Rotors als eine gewichtete Kombination der ersten, zweiten und dritten Schubkraft zu bestimmen, wobei Wichte der Kombination auf einem Maß für die Genauigkeit der ersten, zweiten und dritten Schubkraft basieren.

Dadurch dass die Schubkraft des Rotors aus einer gewichteten Kombination der ersten, zweiten und dritten Schubkraft bestimmt wird, wobei die Wichte der Kombination auf einem Maß für die Genauigkeit der ersten, zweiten und dritten Schubkraft basieren, kann die Genauigkeit der bestimmten Schubkraft des Rotors weiter erhöht werden. Insbesondere ist der Wert einer Schubkraft genauer, je größer die Höhendifferenz zwischen den Sensoren ist, das heißt, die Wichte für die Kombination der ersten bis dritten Schubkraft können insbesondere abhängig von der Höhendifferenz der jeweils beteiligten Sensoren gewählt werden. Des Weiteren können in die Wichte auch Kenntnisse über die Messgenauigkeit der jeweiligen Sensoren eingehen. Dadurch wird es ermöglicht, die Schubkraft des Rotors mit einer hohen Genauigkeit zu bestimmen.

Erfindungsgemäß wird weiter eine Windenergieanlage mit einer Messanordnung wie oben beschrieben vorgeschlagen, wobei die Windenergieanlage dazu eingerichtet ist, in Abhängigkeit der bestimmten Schubkraft betrieben zu werden.

Weiter wird erfindungsgemäß ein Windpark zum Erzeugen von Strom vorgeschlagen, wobei der Windpark aufweist:

- wenigstens eine Windenergieanlage mit einer Messanordnung wie oben beschrieben;
- eine Turbulenzbestimmungseinheit zum Bestimmen der Turbulenz wenigstens einer Windenergieanlage basierend auf der Schubkraft des Rotors der Windenergieanlage, und
- eine Windparkregelungseinheit zum Regeln der wenigstens einen Windenergieanlage des Windparks, insbesondere zum Verringern der Leistung der wenigstens einen Windenergieanlage des Windparks, sodass die Auswirkungen der Turbulenz der wenigstens einen Windenergieanlage auf andere Windenergieanlagen des Windparks verringert wird.

Dadurch dass die Windparkregelungseinheit die Leistung der Windenergieanlagen des Windparks basierend auf der bestimmten Schubkraft des Rotors jeder Windenergieanlage so regelt, dass die Auswirkungen der Turbulenz im Nachlauf der Windenergieanlagen verringert wird, wird es ermöglicht, eine größere Anzahl von Windenergieanlagen pro Fläche in den Windpark zu integrieren, sodass die Gesamtleistung des Windparks pro Fläche erhöht werden kann, ohne die Sicherheit für den Betrieb der Windenergieanlage zu verringern. Im Gegenteil wird die Sicherheit beim Betreiben des Windparks erhöht, dadurch dass auch bei durch die Simulation unvorhergesehenen Situationen der Wert der Turbulenz im Nachlauf jeder Windenergieanlage individuell geregelt werden kann.

Erfindungsgemäß wird auch ein Verfahren zum Bestimmen einer Schubkraft eines Rotors an einer einen Turm und einen aerodynamischen Rotor mit wenigstens einem Rotorblatt aufweisenden Windenergieanlage vorgeschlagen, wobei das Verfahren umfasst:

- Erfassen eines ersten Biegemoments des Turms in einer ersten Höhe und eines zweiten Biegemoments des Turms in einer zweiten Höhe, die von der ersten Höhe verschieden ist, wobei sich das erste und zweite Biegemoment aus jeweils einer Eigenmomentkomponente, aus einer Nickmomentkomponente und aus einer Schubkraftmomentkomponente zusammensetzt,

- Bestimmen einer Schubkraft basierend auf einem auf Basis eines Vergleichs der ersten und zweiten Biegemomente bestimmten ersten Vergleichswerts, wobei der erste Vergleichswert unabhängig von der Eigenmomentkomponente und der Nickmomentkomponente ist.

Es wird vorgeschlagen, das Verfahren so zu betreiben, wie sich aus den Erläuterungen zu wenigstens einer der vorstehenden Ausführungsformen der Messanordnung ergibt.

Erfindungsgemäß wird ferner ein Verfahren zum Betreiben einer Windenergieanlage vorgeschlagen, wobei die Windenergieanlage eine Messanordnung gemäß einer der vorstehend erläuterten Ausführungsformen aufweist und wobei die Windenergieanlage in Abhängigkeit von der bestimmten Schubkraft betrieben wird.

Des Weiteren wird erfindungsgemäß ein Verfahren zum Betreiben eines Windparks vorgeschlagen, wobei das Verfahren die Schritte aufweist:

- Bestimmen einer Schubkraft eines Rotors wenigstens einer Windenergieanlage nach Anspruch 13,
- Bestimmen der Turbulenz der wenigstens einen Windenergieanlage basierend auf der bestimmten Schubkraft des Rotors der Windenergieanlage, und
- Regeln der Windenergieanlagen des Windparks, insbesondere Verringerung der Leistung der wenigstens einen Windenergieanlage des Windparks, sodass die Auswirkungen der Turbulenz der wenigstens einen Windenergieanlage auf andere Windenergieanlagen des Windparks verringert wird.

Die vorliegende Erfindung wird nun nachfolgend exemplarisch anhand von Ausführungsbeispielen unter Bezugnahme auf die begleitenden Figuren näher erläutert.

Fig. 1    zeigt eine schematische Ansicht einer eine Messanordnung aufweisenden Windenergieanlage.

Fig. 2    zeigt eine schematische Ansicht der Zusammensetzung der auf eine Windenergieanlage wirkenden Biegemomente.

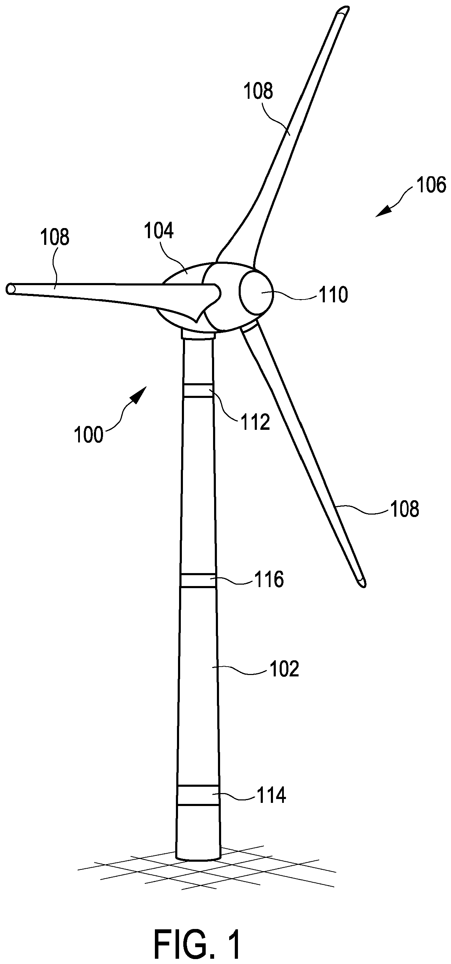

Fig. 1 zeigt eine Windenergieanlage 100 mit einem Turm 102 und einer Gondel 104. An der Gondel 104 ist ein aerodynamischer Rotor 106 mit Rotorblättern 108 und ein Spinner 110 angeordnet. Der Rotor 106 wird im Betrieb durch den Wind in eine Drehbewegung versetzt und treibt dadurch einen Generator in der Gondel 104 an.

Des Weiteren ist am Turm 102 der Windenergieanlage 100 eine Messvorrichtung angeordnet, wobei die Messvorrichtung einen ersten Sensor 112, einen zweiten Sensor 114 und einen dritten Sensor 116 aufweist. Der erste, zweite und dritte Sensor 112, 114, 116 ist jeweils dazu eingerichtet, das Biegemoment des Turmes 102 der Windenergieanlage 100 in der jeweiligen Höhe zu bestimmen.

Der erste, der zweite und der dritte Sensor 112, 114, 116 werden in diesem Ausführungsbeispiel aus jeweils wenigstens zwei DMS-Vollbrücken gebildet. Dabei sind die DMS-Vollbrücken so ausgeführt, dass eine Messgitterfolie mit einem dünnen Widerstandsdraht auf die Oberfläche des Turmes 102 aufgebracht wird, wobei mittels einer Wheatstoneschen Brückenschaltung, insbesondere in der Ausführungsform einer Vollbrücke, Veränderungen in der Länge des Widerstandsdrahts als Veränderungen im Widerstand des Widerstandsdrahts gemessen werden können. Derartige Dehnungsmesssensoren ermöglichen mit einer großen Genauigkeit auch sehr geringe Veränderungen, insbesondere Biegungen, des Trägers, das heißt hier des Turmes 102 der Windenergieanlage 100, zu bestimmen.

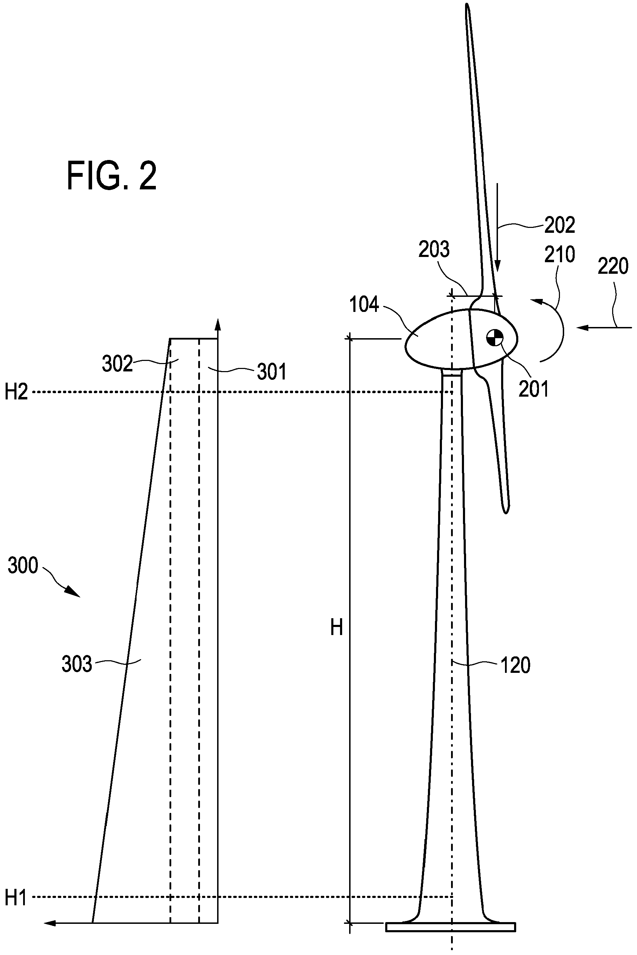

Fig. 2 zeigt schematisch, aus welchen Komponenten sich ein bestimmtes Biegemoment des Turmes 102 der Windenergieanlage 100 zusammensetzt. Die Masse der Gondel 104 erzeugt eine Gewichtskraft 202, die auf den Schwerpunkt 201 der Gondel 104 wirkt. Da das Gewicht der Rotorblätter 108 den Schwerpunkt in Richtung des Rotors 106 verschiebt, liegt der Schwerpunkt 201 der Gondel 104 im Allgemeinen in horizontaler Richtung außerhalb einer vertikalen Mittelachse 120 des Turms 102. Dadurch verursacht die Masse der Gondel 104 ein Eigenmoment am Turm 102 der Windenergieanlage 100. Dieses Eigenmoment bestimmt sich aus der Gewichtskraft 102, die auf die Gondel 104 wirkt, und dem Abstand 203 zwischen dem Schwerpunkt 201 der Gondel 104 und der Mittelachse 120 des Turms 102. Für das Eigenmoment ergibt sich folglich die Formel:

$$M_{Eigen} = Fg \times l_2,$$

wobei $M_{eigen}$ das Eigenmoment der Gondel 104 ist, Fg die Gewichtskraft 202, die auf die Gondel 104 wirkt, und $l_2$ der Abstand 203 zwischen Schwerpunkt 201 der Gondel 104 und der Mittelachse 120 des Turms 102 ist. Zu beachten ist, dass das Eigenmoment der Gondel 104 konstant über die gesamte Höhe H des Turms 102 wirkt.

Des Weiteren wirkt auf den Turm 102 der Windenergieanlage 100 ein Nickmoment 210. Das Nickmoment 210 wird verursacht durch die unterschiedlichen Windgeschwindigkeiten in der durchströmten Rotorfläche. So nimmt im Allgemeinen die Windgeschwindigkeit von unten nach oben über die beschriebene Rotorfläche zu, das heißt, dass ein Rotorblatt 108, das sich oberhalb der Gondel 104 befindet, einer höheren Windgeschwindigkeit ausgesetzt ist als ein Rotorblatt 108, das sich unterhalb der Gondel 104 aufhält. Die dadurch entstehenden Kräfte auf die Rotorblätter 108 erzeugen ein Nickmoment 210, wobei die Belastung des Nickmoments 210 ebenfalls über die gesamte Höhe H des Turms 102 gleich bleibt.

Des Weiteren wirkt eine Schubkraft 220 in Windrichtung auf den Rotor 106, wobei die Schubkraft 220 direkt am Schwerpunkt 201 des Rotors 106 ansetzt. Dies hat zur Folge, dass die Schubkraft 220 ein Biegemoment über den Turm 102 als Hebel auf den Turm 102 ausübt. Insbesondere ist das Biegemoment der Schubkraft 220 abhängig von der Höhe H des Turms 102 und folgt dabei der Gesetzmäßigkeit:

$$M_{Schub} = F_{Schub} \times H,$$

wobei $F_{Schub}$ die Schubkraft 220, $M_{Schub}$ das Biegemoment basierend auf der Schubkraft 220 und H die Höhe des Turms 102 der Windenergieanlage 100 ist.

Die Grafik 300 zeigt nochmals schematisch den Wert des Biegemoments mit der Höhe der Windenergieanlage 100. Dabei ist das Biegemoment auf der x-Achse und die Höhe der Windenergieanlage auf der y-Achse aufgetragen. Der schematische Verlauf des Biegemoments lässt dabei erkennen, dass sich das Biegemoment in jeder Höhe aus den drei Momentkomponenten zusammensetzt, nämlich der Eigenmomentkomponente 301, der Nickmomentkomponente 302 und Schubkraftmomentkomponente 303. Da die Eigenmomentkomponente 301 und die Nickmomentkomponente 302 wie oben erläutert konstant über die Höhe H des Turms 102 sind, zeigt nur die Schubkraftmomentkomponente 303 einen Verlauf, der abhängig von der Höhe H des Turms 102, insbesondere proportional zur Höhe H des Turms 102 ist. Daraus ergibt sich, dass sich beim Abziehen eines Biegemoments auf der Höhe H2 von einem Biegemoment auf der Höhe H1 die Eigenmomentkomponente 301 und die Nickmomentkomponente 302, die konstant über die Höhe sind, und somit in beiden Biegemomenten gleich groß sind, wegheben. Übrig bleibt ein Anteil der Schubkraftmomentkomponente 303.

Da die Schubkraftmomentkomponente 303 direkt proportional zur Höhe H des Turms 102 ist, kann im Allgemeinen mittels der Formel:

$$F_{Schub} = (B1 - B2) / (H1 - H2)$$

die Schubkraft 220, die auf den Rotor 106 wirkt, berechnet werden, wobei B1 ein erstes Biegemoment, B2 ein zweites Biegemoment und H1 eine erste Höhe und H2 eine zweite Höhe des jeweiligen Biegemoments sind.

Basierend auf den obigen Erkenntnissen zur Zusammensetzung der Biegemomente, die auf den Turm 102 der Windenergieanlage 100 wirken, kann also mittels der Messung der Biegemomente in wenigstens zwei Höhen H1, H2 die Schubkraft 220, die auf den Rotor 106 wirkt, bestimmt werden.

In der hier gezeigten Ausführungsform wird das Biegemoment mittels des ersten Sensors 112, des zweiten Sensors 114 und des dritten Sensors 116 in jeweils einer ersten Höhe H1, einer zweiten Höhe H2 und einer dritten Höhe H3 bestimmt. Damit kann durch

$$V1 = B2 - B1$$

ein erster Vergleichswert V1 bestimmt werden, wobei V1 der erste Vergleichswert, B1 das Biegemoment, das vom ersten Sensor 112 gemessen wird, und B2 das zweite Biegemoment, das vom zweiten Sensor 114 gemessen wird, ist. Des Weiteren kann durch

$$V2 = B3 - B1,$$

$$V3 = B2 - B3,$$

ein zweiter und ein dritter Vergleichswert bestimmt werden, wobei V2 der zweite Vergleichswert, V3 der dritte Vergleichswert und B3 das Biegemoment ist, das vom dritten Sensor 116 gemessen wird.

Wie sich aus der schematischen Darstellung 300 ergibt und oben erläutert wurde, enthalten alle drei Vergleichswerte nur noch Anteile der Schubkraftmomentkomponente 303. Der schematischen Darstellung 300 ist ebenfalls zu entnehmen, dass die Schubkraftkomponente 303 konstant mit der Höhe abnimmt. Daraus folgt, dass bei korrekter Messung des Biegemoments das zweite und das dritte Biegemoment gleich sind, es sollte also gelten V2 = V3. Da in diesem Ausführungsbeispiel der dritte Sensor 116 in der Mitte zwischen dem ersten Sensor 112 und dem zweiten Sensor 114 angebracht ist, gilt weiter, dass der zweite Vergleichswert und der dritte Vergleichswert genau halb so groß wie der erste Vergleichswert sein sollten. Weichen im Betrieb der Windenergieanlage die berechneten Vergleichswerte zu stark von diesen genannten Bedingungen ab, so deutet dies darauf hin, dass die Funktion wenigstens eines der Sensoren gestört ist. Insbesondere kann eine Sicherheitsmarge festgelegt werden, innerhalb derer eine korrekte Funktionsweise der Sensoren noch sichergestellt ist.

Eine erste, zweite und dritte Schubkraft des Rotors 106 kann wie oben bereits erläutert berechnet werden durch

$$F_{Schub1} = V1 / (H1 - H2),$$

$$F_{Schub2} = V2 / (H2 - H3),$$

$$F_{Schub3} = V3 / (H1 - H3)$$

berechnet werden, wobei H1 die Höhe ist, in der der erste Sensor 112 das Biegemoment misst, H2 die Höhe ist, in der der zweite Sensor 114 das Biegemoment misst und H3 die Höhe ist, in der der dritte Sensor 116 das Biegemoment misst.

Unter Berücksichtigung der Messgenauigkeit sollten folglich alle drei berechneten Schubkräfte gleich sein. Zur Bestimmung der Schubkraft 220 des Rotors 106 unter Berücksichtigung der Messgenauigkeit der verschiedenen Sensoren können die oben berechneten drei Schubkräfte in folgender Formel verwendet werden:

$$F_{schub} = \sum_i W_i \times F_{schub,i}$$

wobei i von 1 bis 3 in diesem Ausführungsbeispiel läuft und Wi Wichte sind, die die Genauigkeit der jeweiligen Messwerte abbilden. Für die Wichte Wi gilt weiter, dass die Summe über alle Wichte Eins entsprechen muss. Die Wichte Wi können zum Beispiel abhängig sein von der Höhendifferenz, die in die jeweilige Berechnung der Schubkraft eingegangen ist. Dabei ist eine größere Höhendifferenz indikativ für eine genauere Berechnung der Schubkraft als eine kleinere Höhendifferenz. Weiter können die Wichte Wi Informationen über bekannte Messgenauigkeiten der in den einzelnen Höhen verwendeten Sensoren aufweisen. Auf diese oben erläuterte Weise ist eine besonders genaue Bestimmung der Schubkraft 220, die auf den Rotor 106 wirkt, möglich.

Dies ermöglicht es, basierend auf der bestimmten Schubkraft 220 des Rotors 106, die Turbulenz im Nachlauf des Rotors 106 zu bestimmen. Insbesondere kann aus der gemessenen Schubkraft 220 der Schubkoeffizient des Rotors 106 bestimmt werden. Dabei gilt: Je höher der Schubkoeffizientwert, desto mehr Turbulenzen werden durch den drehenden Rotor 106 im Nachlauf erzeugt.

Durch diesen direkten Zusammenhang bewirkt eine Regelung der Windenergieanlage 100 basierend auf der Schubkraft 220 oder dem Schubkraftkoeffizienten eine direkte Regelung der Turbulenz, die durch den Rotor 106 im Nachlauf erzeugt wird.

Befindet sich die Windenergieanlage 100 in einem Windpark, so kann die Windenergieanlage 100 so betrieben werden, dass basierend auf der Bestimmung der Schubkraft 220 die Turbulenzen so reduziert werden, dass die anderen Windenergieanlagen des Windparks nicht über ein bestimmtes Maß hinaus beeinflusst werden. Insbesondere kann bei kritischen Schubkräften die Windenergieanlage 100 in einem leistungsreduzierten Modus betrieben werden. Dadurch wird es ermöglicht, in der Planung mehr Windenergieanlagen pro Fläche in den Windpark zu integrieren, ohne dass die Sicherheit gefährdet ist, bei gleichzeitiger Erhöhung der Energieausbeute.

In der oben beschriebenen Ausführungsform umfasst die Messanordnung drei Sensoren. In einer anderen erfindungsgemäßen Ausführungsform kann die Messanordnung aber auch zwei, oder mehr als drei Sensoren aufweisen.

In der oben beschriebenen Ausführungsform werden als Sensoren DMS-Vollbrücken verwendet. In einer anderen Ausführungsform können aber auch andere Sensoren, beispielsweise optische Dehnungssensoren, verwendet werden, die dazu eingerichtet sind Biegemomente des Turms der Windenergieanlage zu bestimmen.

**Patentansprüche**

1. Messanordnung einer einen Turm (102) und einen aerodynamischen Rotor (106) mit wenigstens einem Rotorblatt (108) aufweisenden Windenergieanlage (100) zum Bestimmen einer Schubkraft (220) des Rotors (106), umfassend:

   - eine Messvorrichtung eingerichtet zum Erfassen eines ersten Biegemoments (B1) des Turms (102) in einer ersten Höhe (H1) und eines zweiten Biegemoments (B2) des Turms (102) in einer zweiten Höhe (H2), die von der ersten Höhe (H1) verschieden ist, wobei sich das erste und zweite Biegemoment (B1, B2) aus jeweils einer Eigenmomentkomponente, aus einer Nickmomentkomponente und aus einer Schubkraftmomentkomponente zusammensetzt,
   - eine Schubkraftbestimmungseinheit eingerichtet zum Bestimmen einer Schubkraft (220) basierend auf einem auf Basis eines Vergleichs der ersten und zweiten Biegemomente (B1, B2) bestimmten ersten Vergleichswerts (V1), wobei der erste Vergleichswert (V1) unabhängig von der Eigenmomentkomponente und der Nickmomentkomponente ist.

2. Messanordnung nach Anspruch 1, wobei die Messvorrichtung einen ersten Sensor (112) zum Erfassen des ersten Biegemoments (B1) des Turms (102) in der ersten Höhe (H1) und einen zweiten Sensor (114) zum Erfassen des zweiten Biegemoments (B2) des Turms (102) in der zweiten Höhe (H2), die von der ersten Höhe (H1) verschieden ist, aufweist.

3. Messanordnung nach Anspruch 2, wobei der erste Sensor (112) direkt unterhalb einer Gondel (104) der Windenergieanlage (100) angeordnet ist und der zweite Sensor (114) in der Nähe eines Fußes der Windenergieanlage (100) angeordnet ist.

4. Messanordnung nach Anspruch 2 oder 3, wobei die Sensoren (112, 114) Dehnungsmessstreifen, insbesondere DMS-Vollbrücken, aufweisen.

5. Messanordnung nach einem der vorherigen Ansprüche, wobei die Schubkraftbestimmungseinheit eingerichtet ist, als ersten Vergleichswert (V1) eine Differenz zwischen dem ersten und dem zweiten Biegemoment (B1, B2) zu bestimmt.

6. Messanordnung nach Anspruch 5, wobei die Schubkraftbestimmungseinheit eingerichtet ist, eine Schubkraft (220) des Rotors (106) basierend auf dem ersten Vergleichswert (V1) und der Höhendifferenz zwischen der ersten und der zweiten Höhe (H1, H2), insbesondere als Verhältnis des ersten Vergleichswerts (V1) und der Höhendifferenz, zu bestimmt.

7. Messanordnung nach einem der Ansprüche 2 bis 6, wobei die Messvorrichtung wenigstens einen dritten Sensor (116) zum Erfassen eines dritten Biegemoments (B3) des Turms (102) in einer dritten Höhe (H3) aufweist, wobei die dritte Höhe (H3) zwischen der ersten und der zweiten Höhe (H1, H2), insbesondere in der Mitte, liegt.

8. Messanordnung nach Anspruch 7, wobei die Schubkraftbestimmungseinheit dazu eingerichtet ist, wenigstens einen zweiten und einen dritten Vergleichswert (V2, V3) zu bestimmen, wobei der zweite Vergleichswert (V2) als eine Differenz zwischen dem ersten und dem dritten Biegemoment (B1, B3) und der dritte Vergleichswert als eine Differenz zwischen dem dritten und dem zweiten Biegemoment (B3, B2) gebildet wird.

9. Messanordnung nach Anspruch 8, wobei die Schubkraftbestimmungseinheit dazu eingerichtet ist, eine erste Schubkraft basierend auf dem ersten Vergleichswert (V1) und einer Höhendifferenz zwischen der ersten und der zweiten Höhe (H1, H2), eine zweite Schubkraft basierend auf dem zweiten Vergleichswert (V2) und einer Höhendifferenz zwischen der ersten und der dritten Höhe (H1, H3), und eine dritte Schubkraft basierend auf dem dritten Vergleichswert (V3) und einer Höhendifferenz zwischen der dritten und der zweiten Höhe (H3, H2) zu bestimmen.

10. Messanordnung nach Anspruch 9, wobei die Schubkraftbestimmungseinheit dazu eingerichtet ist, die Schubkraft (220) des Rotors als Mittelwert aus wenigstens zweien der ersten, zweiten und dritten Schubkraft zu bestimmen, oder wobei die Schubkraftbestimmungseinheit eingerichtet ist, die Schubkraft (220) des Rotors als eine gewichtete Kombination der ersten, zweiten und dritten Schubkraft zu bestimmen, wobei Wichte der Kombination basieren auf einem Maß für die Genauigkeit der ersten, zweiten und dritten Schubkraft.

11. Windenergieanlage (100) mit einer Messanordnung nach einem der Ansprüche 1 bis 10, wobei die Windenergieanlage (100) dazu eingerichtet ist, in Abhängigkeit der bestimmten Schubkraft (220) betrieben zu werden.

12. Windpark zum Erzeugen von Strom, wobei der Windpark aufweist:

- wenigstens eine Windenergieanlage (100) nach Anspruch 11;
- eine Turbulenzbestimmungseinheit zum Bestimmen der Turbulenz wenigstens einer Windenergieanlage (100) basierend auf der Schubkraft (220) des Rotors (106) der Windenergieanlage (100), und
- eine Windparkregelungseinheit zum Regeln der Windenergieanlage (100) des Windparks, insbesondere zum Verringern der Leistung der wenigstens einen Windenergieanlage (100) des Windparks, sodass die Auswirkungen der Turbulenz der wenigstens einen Windenergieanlage (100) auf andere Windenergieanlagen des Windparks verringert wird.

13. Verfahren zum Bestimmen einer Schubkraft (220) eines Rotors (106) an einer einen Turm (102) und einen aerodynamischen Rotor (106) mit wenigstens einem Rotorblatt (108) aufweisenden Windenergieanlage (100), wobei das Verfahren umfasst:

- Erfassen eines ersten Biegemoments (B1) des Turms (102) in einer ersten Höhe (H1) und eines zweiten Biegemoments (B2) des Turms (102) in einer zweiten Höhe (H2), die von der ersten Höhe (H1) verschieden ist, wobei sich das erste und zweite Biegemoment (B1, B2) aus jeweils einer Eigenmomentkomponente, aus einer Nickmomentkomponente und aus einer Schubkraftmomentkomponente zusammensetzt,
- Bestimmen einer Schubkraft (220) basierend auf einem auf Basis eines Vergleichs der ersten und zweiten Biegemomente (B1, B2) bestimmten ersten Vergleichswerts (V1), wobei der erste Vergleichswert (V1) unabhängig von der Eigenmomentkomponente und der Nickmomentkomponente ist.

14. Verfahren zum Betreiben einer Windenergieanlage (100), die eine Messanordnung nach einem der Ansprüche 1 bis 10 aufweist, wobei die Windenergieanlage (100) in Abhängigkeit der nach Anspruch 13 bestimmten Schubkraft (220) betrieben wird.

15. Verfahren zum Betreiben eines Windparks, wobei das Verfahren die Schritte aufweist:

- Bestimmen einer Schubkraft eines Rotors wenigstens einer Windenergieanlage nach Anspruch 13,

- Bestimmen der Turbulenz der wenigstens einen Windenergieanlage (100) basierend auf der bestimmten Schubkraft (220) des Rotors (106) der Windenergieanlage (100), und
- Regeln der Windenergieanlagen des Windparks, insbesondere Verringerung der Leistung der wenigstens einen Windenergieanlage (100) des Windparks, sodass die Auswirkungen der Turbulenz der wenigstens einen Windenergieanlage (100) auf andere Windenergieanlagen des Windparks verringert wird.

**Claims**

1. A measuring arrangement of a wind power installation (100) having a tower (102) and an aerodynamic rotor (106) with at least one rotor blade (108) for determining a thrust force (220) of the rotor (106), comprising:

   - a measuring device configured for detecting a first bending moment (B1) of the tower (102) at a first height (H1) and a second bending moment (B2) of the tower (102) at a second height (H2), which is different from the first height (H1), the first and second bending moments (B1, B2) being made up in each case of a natural moment component, a pitching moment component and a thrust force moment component,
   - a thrust force determining unit configured for determining a thrust force (220) based on a first comparison value (V1), determined on the basis of a comparison of the first and second bending moments (B1, B2), the first comparison value (V1) being independent of the natural moment component and the pitching moment component.

2. The measuring arrangement as claimed in claim 1, the measuring device having a first sensor (112) for detecting the first bending moment (B1) of the tower (102) at the first height (H1) and a second sensor (114) for detecting the second bending moment (B2) of the tower (102) at the second height (H2), which is different from the first height (H1).

3. The measuring arrangement as claimed in claim 2, the first sensor (112) being arranged directly under a nacelle (104) of the wind power installation (100) and the second sensor (114) being arranged in the vicinity of a foot of the wind power installation (100).

4. The measuring arrangement as claimed in claim 2 or 3, the sensors (112, 114) having strain gauges, in particular full strain gauge bridges.

5. The measuring arrangement as claimed in one of the preceding claims, the thrust force determining unit being designed for determining as the first comparison value (V1) a difference between the first and second bending moments (B1, B2).

6. The measuring arrangement as claimed in claim 5, the thrust force determining unit being designed for determining a thrust force (220) of the rotor (106) based on the first comparison value (V1) and the difference in height between the first and second heights (H1, H2), in particular as a ratio of the first comparison value (V1) and the difference in height.

7. The measuring arrangement as claimed in one of claims 2 to 6, the measuring device having at least a third sensor (116) for detecting a third bending moment (B3) of the tower (102) at a third height (H3), the third height (H3) lying between the first and second heights (H1, H2), in particular midway.

8. The measuring arrangement as claimed in claim 7, the thrust force determining unit being designed to determine at least a second and a third comparison value (V2, V3), the second comparison value (V2) being formed as a difference between the first and third bending moments (B1, B3) the third comparison value being formed as a difference between the third and second bending moments (B3, B2).

9. The measuring arrangement as claimed in claim 8, the thrust force determining unit being designed for determining a first thrust value based on the first comparison value (V1) and a difference in height between the first and second heights (H1, H2), a second thrust value based on the second comparison value (V2) and a difference in height between the first and third heights (H1, H3), and a third thrust force based on the third comparison value (V3) and a difference in height between the third and second heights (H3, H2).

10. The measuring arrangement as claimed in claim 9, the thrust force determining unit being designed for determining the thrust force (220) of the rotor as a mean value of at least two of the first, second and third thrust forces, or the thrust force determining unit being designed for determining the thrust force (220) of the rotor as a weighted combination of the first, second and third thrust forces, weights of the combination being based on a measure of the accuracy of the first, second and third thrust forces.

11. A wind power installation (100) with a measuring arrangement as claimed in one of claims 1 to 10, the wind power installation (100) being designed for being operated in dependence on the thrust force (220) determined.

**12.** A wind farm for generating electricity, the wind farm having:

- at least one wind power installation (100) as claimed in claim 11;
- a turbulence determining unit for determining the turbulence of at least one wind power installation (100) based on the thrust force (220) of the rotor (106) of the wind power installation (100), and
- a wind farm control unit for controlling the wind power installation (100) of the wind farm, in particular for reducing the output of the at least one wind power installation (100) of the wind farm, so that the effects of the turbulence of the at least one wind power installation (100) on other wind power installations of the wind farm is reduced.

**13.** A method for determining a thrust force (220) of a rotor (106) on a wind power installation (100) having a tower (102) and an aerodynamic rotor (106) with at least one rotor blade (108), the method comprising:

- detecting a first bending moment (B1) of the tower (102) at a first height (H1) and a second bending moment (B2) of the tower (102) at a second height (H2), which is different from the first height (H1), the first and second bending moments (B1, B2) being made up in each case of a natural moment component, a pitching moment component and a thrust force moment component,
- determining a thrust force (220) based on a first comparison value (V1) determined on the basis of a comparison of the first and second bending moments (B1, B2), the first comparison value (V1) being independent of the natural moment component and the pitching moment component.

**14.** A method for operating a wind power installation (100), which has a measuring arrangement as claimed in one of claims 1 to 10, the wind power installation (100) being operated in dependence on the thrust force (220) determined as claimed in claim 13.

**15.** A method for operating a wind farm, the method having the steps of:

- determining a thrust force of a rotor of at least wind turbine according to claim 13,
- determining the turbulence of at least one wind power installation (100) based on the determined thrust force (220) of the rotor (106) of the wind power installation (100), and

- controlling the wind power installations of the wind farm, in particular reducing the output of the at least one wind power installation (100) of the wind farm, so that the effects of the turbulence of the at least one wind power installation (100) on other wind power installations of the wind farm is reduced.

**Revendications**

**1.** Ensemble de mesure d'une éolienne (100) présentant une tour (102) et un rotor aérodynamique (106) avec au moins une pale de rotor (108), pour définir une poussée (220) du rotor (106), comprenant :

- un dispositif de mesure mis au point pour détecter un premier couple de flexion (B1) de la tour (102) à une première hauteur (H1) et un deuxième couple de flexion (B2) de la tour (102) à une deuxième hauteur (H2), qui est différente de la première hauteur (H1), dans lequel le premier et le deuxième couple de flexion (B1, B2) se composent de respectivement une composante de couple propre, d'une composante de couple de tangage et d'une composante de couple de poussée,
- une unité de définition de poussée mise au point pour définir une poussée (220) en se basant sur une première valeur de comparaison (V1) définie sur la base d'une comparaison des premier et deuxième couples de flexion (B1, B2), dans lequel la première valeur de comparaison (V1) est indépendante de la composante de couple propre et de la composante de couple de tangage.

**2.** Ensemble de mesure selon la revendication 1, dans lequel le dispositif de mesure présente un premier capteur (112) pour détecter le premier couple de flexion (B1) de la tour (102) à la première hauteur (H1) et un deuxième capteur (114) pour détecter le deuxième couple de flexion (B2) de la tour (102) à la deuxième hauteur (H2), qui est différente de la première hauteur (H1).

**3.** Ensemble de mesure selon la revendication 2, dans lequel le premier capteur (112) est disposé directement sous une nacelle (104) de l'éolienne (100) et le deuxième capteur (114) est disposé à proximité d'un pied de l'éolienne (100).

**4.** Ensemble de mesure selon la revendication 2 ou 3, dans lequel les capteurs (112, 114) présentent des jauges de contrainte, en particulier des ponts complets de jauge de contrainte.

**5.** Ensemble de mesure selon l'une quelconque des revendications précédentes, dans lequel l'unité de définition de poussée est mise au point pour définir, en tant que première valeur de comparaison (V1), une différence entre le premier et le deuxième couple de flexion (B1, B2).

6. Ensemble de mesure selon la revendication 5, dans lequel l'unité de définition de poussée est mise au point pour définir une poussée (220) du rotor (106) en se basant sur la première valeur de comparaison (V1) et la différence de hauteur entre la première et la deuxième hauteur (H1, H2), en particulier en tant que rapport entre la première valeur de comparaison (V1) et la différence de hauteur.

7. Ensemble de mesure selon l'une quelconque des revendications 2 à 6, dans lequel le dispositif de mesure présente au moins un troisième capteur (116) pour détecter un troisième couple de flexion (B3) de la tour (102) à une troisième hauteur (H3), dans lequel la troisième hauteur (H3) se situe entre la première et la deuxième hauteur (H1, H2), en particulier au milieu.

8. Ensemble de mesure selon la revendication 7, dans lequel l'unité de définition de poussée est mise au point pour définir au moins une deuxième et une troisième valeur de comparaison (V2, V3), dans lequel la deuxième valeur de comparaison (V2) est obtenue en tant qu'une différence entre le premier et le troisième couple de flexion (B1, B3) et la troisième valeur de comparaison est obtenue en tant qu'une différence entre le troisième et le deuxième couple de flexion (B3, B2).

9. Ensemble de mesure selon la revendication 8, dans lequel l'unité de définition de poussée est mise au point pour définir une première poussée en se basant sur la première valeur de comparaison (V1) et une différence de hauteur entre la première et la deuxième hauteur (H1, H2), une deuxième poussée en se basant sur la deuxième valeur de comparaison (V2) et une différence de hauteur entre la première et la troisième hauteur (H1, H3), et une troisième poussée en se basant sur la troisième valeur de comparaison (V3) et une différence de hauteur entre la troisième et la deuxième hauteur (H3, H2).

10. Ensemble de mesure selon la revendication 9, dans lequel l'unité de définition de poussée est mise au point pour définir la poussée (220) du rotor en tant que valeur moyenne à partir d'au moins deux de la première, deuxième et troisième poussée ou dans lequel l'unité de définition de poussée est mise au point pour définir la poussée (220) du rotor en tant qu'une combinaison pondérée de la première, deuxième et troisième poussée, dans lequel le poids spécifique de la combinaison se base sur une mesure pour la précision de la première, deuxième et troisième poussée.

11. Éolienne (100) avec un ensemble de mesure selon l'une quelconque des revendications 1 à 10, dans laquelle l'éolienne (100) est mise au point pour fonctionner en fonction de la poussée (220) définie.

12. Parc éolien pour générer du courant, dans lequel le parc éolien présente :

   - au moins une éolienne (100) selon la revendication 11 ;
   - une unité de définition de turbulence pour définir la turbulence d'au moins une éolienne (100) en se basant sur la poussée (220) du rotor (106) de l'éolienne (100), et
   - une unité de régulation de parc éolien pour réguler l'éolienne (100) du parc éolien, en particulier pour réduire la puissance de l'au moins une éolienne (100) du parc éolien de sorte que les impacts de la turbulence de l'au moins une éolienne (100) sur d'autres éoliennes du parc éolien sont réduits.

13. Procédé pour définir une poussée (220) d'un rotor (106) sur une éolienne (100) présentant une tour (102) et un rotor (106) aérodynamique avec au moins une pale de rotor (108), dans lequel le procédé comprend :

   - la détection d'un premier couple de flexion (B1) de la tour (102) à une première hauteur (H1) et d'un deuxième couple de flexion (B2) de la tour (102) à une deuxième hauteur (H2), qui est différente de la première hauteur (H1), dans lequel le premier et le deuxième couple de flexion (B1, B2) se composent respectivement d'une composante de couple propre, d'une composante de couple de tangage et d'une composante de couple de poussée,
   - la définition d'une poussée (220) en se basant sur une première valeur de comparaison (V1) définie sur la base d'une comparaison des premier et deuxième couples de flexion (B1, B2), dans lequel la première valeur de comparaison (V1) est indépendante de la composante de couple propre et de la composante de couple de tangage.

14. Procédé pour faire fonctionner une éolienne (100), qui présente un ensemble de mesure selon l'une quelconque des revendications 1 à 10, dans lequel l'éolienne (100) fonctionne en fonction de la poussée (220) définie selon la revendication 13.

15. Procédé pour faire fonctionner un parc éolien, dans lequel le procédé présente les étapes :

- de définition d'une poussée d'un rotor d'au moins une éolienne selon la revendication 13,
- de définition de la turbulence de l'au moins une éolienne (100) en se basant sur la poussée (220) définie du rotor (106) de l'éolienne (100), et
- de régulation des éoliennes du parc éolien, en particulier de réduction de la puissance de l'au moins une éolienne (100) du parc éolien de sorte que les impacts de la turbulence de l'au moins une éolienne (100) sur d'autres éoliennes du parc éolien sont réduits.

FIG. 1

# FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110158806 A1
- US 20130156577 A1